# DEMANDE DE BREVET EUROPEEN

(11) **EP 1 702 897 A1**
(43) Date de publication de la demande: **20.09.2006**
(21) Numéro de dépôt: 05368009.6
(22) Date de dépôt: 14.03.2005
(51) Int. Cl.: C04B 11/05

(54) **Procédé de traitement d'un gypse ou d'un plâtre**

(71) Demandeur: Couturier, Jean, 06400 Cannes (FR); Palacios, Crisanto, 17600 Figueras (Girona) (ES)
(72) Inventeur: Couturier, Jean, 06400 Cannes (FR); Palacios, Crisanto, 17600 Figueras (Girona) (ES)
(74) Mandataire: Schuffenecker, Thierry

(57) **Abrégé**

Procédé de traitement du gypse (ou SO₄Ca, 2H₂0) ou d'un plâtre comportant les étapes suivantes :
- chauffage dudit gypse ou plâtre jusqu'à une température comprise entre 180 degrés et 600 degrés,
- refroidissement dudit gypse ou plâtre pour le ramener à une température de moins de 120 degrés en moins de trois minutes,
- introduction de chaux dans une proportion de 2 à 25 pour cent en poids ;
- broyage du mélange résultant pour ramener la granulométrie finale à une valeur comprise entre quelques microns à 200 microns.

## Description

### Domaine technique de l'invention

La présente invention concerne l'industrie du plâtre et ciment, et plus spécialement un procédé de traitement du gypse ou d'un plâtre.

### Etat de la technique

Le gypse est utilisé, depuis des millénaires, pour faire du plâtre qui est un des plus anciens matériaux de construction, et notamment le moins onéreux.

Le plâtre traditionnel s'obtient par déshydratation partielle de gypse (SO₄ Ca, 2H₂O).

Comme on le sait, le gypse, ou sulfate de calcium dihydraté, est un produit naturel cristallise dans le système monoclinique. Il s'agit du degré d'hydratation le plus fort. Les éléments constituant la structure du gypse sont les suivants :
- des ions SO₄ formant des tétraèdres dont l'atome central est le souffre et les sommets des atomes d'oxygène ;
- des atomes de calcium, chaque atome étant relié à 8 atomes d'oxygène dont deux appartiennent à des molécules d'eau ;
- des molécules d'eau, chacune étant liée à deux atomes d'oxygène de deux tétraèdres S04 différents et à un atome de calcium.

On trouvera de plus amples informations dans la littérature - abondante - portant sur le gypse, mais tout spécialement dans l'ouvrage suivant « Conditions d'Elaboration d'Anhydrite Soluble (α) lors de la déshydratation du Gypse », Mémoire de Diplôme d'Etudes Supérieures Spécialisées (D.E.S.S.) de Béatrice BORYS 1998, soutenue le 16 Septembre 1998, Université Paul Sabatier de Toulouse (France).

Le traitement le plus connu du gypse est, sans aucun doute, le traitement thermique visant à la formation du ou des plâtres. Comme on le sait, pour obtenir du plâtre, on chauffe le gypse à une température de l'ordre 110-140 degrés Celsius.

Une déshydration plus poussée du gypse à une température comprise entre 150 et 250 degrés conduit à la formation de l'anhydrite soluble III (CaSO₄ εH₂O) - également désignée sous l'appellation anhydrite α suivant la norme ASTM. On notera que cet anhydrite III est appelé anhydrite soluble en raison de son hydratation rapide en semi-hydrate (plâtre) sous les conditions atmosphériques. Ce produit anhydrite soluble est par conséquent très instable et cela a, pendant des siècles réduit considérablement l'utilisation du gypse au seuls plâtres.

On a relevé toutefois, des formes d'anhydrite III stables dans certaines circonstances, et notamment dans la composition des joints des pyramides égyptiennes. Ces formes stables correspondent à un degré déshydratation très avancé et pourtant stables. On pense que les effets conjugués de la pression et de la température extérieures expliquent quelque peu cette forme stable et si remarquable de l'anhydrite .

Si l'on chauffe encore le gypse au-delà de 380 degrés Celsius, on provoque la perte de l'eau résiduelle et par conséquent la transformation de la structure de l'anhydrite soluble en la structure stable et compacte de l'anhydrite insoluble (ou anhydrite II). Cela s'obtient au moyen d'une réaction chimique exothermique... On obtient ainsi un composé stable mais qui, malheureusement ne présente pas les mêmes caractéristiques que celles de l'anhydrite alpha, et notamment en terme de rapidité de prise, de résistance etc...

La demande de brevet WO 00/47531 intitulée « Procédé de fabrication du liant hydraulique à base d'anhydrite III ou α et liant hydraulique ainsi obtenu » , déposée le 18 Mars 1998, décrit une manière particulière avantageuse permettant d'obtenir une forme stabilisée d'anhydrite III soluble. Cette forme stabilisée est obtenue au moyen d'une succession de deux phases de chauffage et de brusque refroidissement. On obtient ainsi un produit présentant des caractéristiques remarquables : une prise très rapide, un accroissement significatif de la résistance mécanique, une meilleure isolation phonique et thermique. En dépit de ces avantages considérables, on a relevé qu'il subsistait toutefois un degré de solubilité qui pouvait se révéler gênant.

La présente invention remédie à cet inconvénient...

### Exposé de l'invention

La présente invention a pour objet un nouveau traitement physique, chimique et thermique du sulfate de calcium SO₄ Ca, 2H₂O permettant l'obtention d'un liant présentant des caractéristiques remarquables.

Un autre but de la présente invention consiste un nouveau procédé permettant l'obtention simultanée, et dans des proportions réglables, d'Anhydrite III avec de l'Anhydrite II, en combinaison avec de la chaux.

L'invention réalise ces buts au moyen d'un procédé de traitement du gypse ( ou SO₄Ca, 2H₂O) ou d'un plâtre comportant les étapes suivantes :
- chauffage dudit gypse ou plâtre jusqu'à une température comprise entre 180 degrés et 600 degrés,
- refroidissement dudit gypse ou plâtre pour le ramener à une température de moins de 120 degrés en moins de trois minutes,
- introduction de chaux dans une proportion de 2 à 25 pour cent en poids ;
- broyage du mélange résultant pour ramener la granulométrie finale à une valeur comprise entre quelques microns à 200 microns.

De préférence, la phase de refroidissement est effectuée en quelques secondes.

Dans un mode de réalisation préféré, la température de cuisson est réglée de manière à fixer la proportion variable d'Anhydrite Il et d'Anhydrite III.

Alternativement, la chaux est introduite avant la phase de cuisson.

### Description d'un mode de réalisation préféré

Le procédé de traitement du gypse que l'on décrit ci-après est particulièrement adapté à la fabrication d'un liant hydraulique destiné à l'industrie de la construction.

On notera toutefois qu'il ne s'agit que d'un exemple de réalisation, étant entendu qu'un homme du métier pour utiliser le procédé de l'invention pour l'obtention de produits divers, tels qu'adjuvants, activants, voire même catalyseur...

Le procédé consiste à partir d'une matière première qui est du type gypse sous la forme d'un gypse naturel ou de synthèse industrielle. La granulométrie de départ sera variable en fonction des applications recherchées. De préférence, on part d'une granulométrie variant de quelques microns à quelques millimètres.

Le procédé suivant l'invention comporte une première phase de cuisson destinée à faire porter la température du sulfate de calcium à une température comprise entre 180 degrés C et 600°C. On notera que cette phase de cuisson pourra être réalisée dans un four - de préférence à chauffage indirect - tels qu'on les rencontre dans l'industrie de fabrication du plâtre. Plus particulièrement, on utilisera des fours dont la température sera comprise entre 400°C et 1000°C.

La durée de la phase de cuisson est comprise entre 2 minutes et 20 minutes. On utilise de préférence une durée comprise entre 6 et 10 minutes. Il est à noter, comme on le verra ci-après, que la durée de cuisson qui sera retenue sera fonction de la granulométrie et de la température du four....

Après la phase de cuisson, le procédé suivant l'invention consiste à effectuer un brusque refroidissement du gypse pour ramener sa température à une valeur inférieure à 120 degrés Celsius. Ce refroidissement devra être effectué en un temps inférieur à trois minutes, et les meilleurs résultats seront obtenus avec un refroidissement en quelques secondes. Plusieurs moyens existent pour permettre un tel refroidissement. Par exemple, on pourra utiliser un four tournant présentant une double enveloppe dans laquelle circule un fluide de refroidissement. On peut également utiliser une technique connue d'un homme du métier sous la désignation FLASH permettant de réaliser ce brusque refroidissement.

Ce brusque refroidissement est particulièrement important car il permet de bloquer la cristallographie du produit composé d'anhydrite III et d'anhydrite II et de la rendre stable. On a observé que ce produit se présente sous la forme de grains composites qui sont constitués par de l'Anhydrite III disposé en leur centre, et d'anhydrite Il situé en périphérie de ces grains. On obtient cette structure composite en raison du fait que la zone périphérique des grains est en contact direct avec la source de chaleur alors que le centre des grains est protégé par l'anhydrite II qui s'est formé en périphérie. Il est donc soumis à une température inférieure, expliquant ainsi la formation d'Anhydrite II.

On notera en outre que l'on réalisera ce refroidissement en ayant soin d'éliminer la vapeur d'eau quelque soit le degré hydrométrique et la température extérieurs.

Après la seconde phase de refroidissement, on procède ensuite à une introduction de chaux Ca0 , de préférence de la chaux Ca (OH)₂ dans une proportion de 2 à 25 pour cent en poids. On pourrait également compléter cette introduction de chaux par une introduction de sulfate (potassium ou sodium). Alternativement, on pourra introduire la chaux avant la phase de cuisson.

La quatrième étape du procédé consiste ensuite en un broyage pour permettre, d'une part, un mélange homogène des constituants du mélange - à savoir l'anhydrite II , l'anhydrite III et la chaux - et , d'autre part, de ramener la granulométrie du mélange à une valeur de quelques microns. De préférence, la granulométrie du produit final sera de quelques microns à deux cents microns.

On a observé, et c'est un des avantages significatifs de l'invention, que l'on améliore ainsi la réactivité du produit, la rhéologie du mélange, sa résistance mécanique ainsi que sa stabilité dans le temps.

En outre, la chaux participe à une meilleure dissolution et une meilleure cristallisation dans la prise hydraulique du liant résultant du procédé selon l'invention.

Le procédé qui vient d'être décrit permet l'obtention d'un liant hydraulique par traitement physico-thermique et chimique du sulfate de calcium (ou gypse) et contenant un mélange d'anhydrite III et d'anhydrite II et de chaux.

Avant broyage les grains du liant sont constitués par l'Anhydrite III disposé au centre des grains et de l'Anhydrite II localisé en périphérie de ces mêmes grains. L'opération de broyage consiste donc à venir éclater ces grains de manière à obtenir un mélange particulièrement homogène.

On notera enfin que l'on pourra venir faire varier la proportion d'anhydrite II et d'anhydrite III en venant jouer sur les trois conditions suivantes :
- la granulométrie de départ du gypse ;
- la température de cuisson
- la durée de la cuisson

On a observé, en effet que ces trois conditions permettent de moduler l'épaisseur de la couche d'anhydrite II dans les grains résultants des deux premières phases du procédé.

Après broyage, on obtient par conséquent un mélange particulièrement fluide composé d'une proportion variable d'Anhydrite II, d'Anhydrite III et de chaux, en fonction des conditions mentionnées ci-dessus. Ce nouveau procédé permet ainsi, ce que ne permettait pas le procédé décrit dans la demande WO 00/47531, à savoir la production simultanée, et dans des proportions variables et réglables sur un plan industriel, d'Anhydrite III avec, le cas échéant, de l'Anhydrite III et de la chaux. Ces trois constituants coopèrent intimement les uns avec les autres pour la constitution d'un produit présentant des caractéristiques particulièrement remarquables et avantageuses.

C'est un avantage considérable de l'invention puisqu'il permet, en fonction des applications recherchées, de réaliser le mélange adéquat au moyen d'une même structure industrielle.

Pour certaines applications industrielles on privilégiera plutôt la formation d'anhydrite III alors que, pour d'autres, on recherchera d'abord la formation d'Anhydrite II.

Le procédé qui vient d'être décrit est particulièrement adapté au traitement du gypse. On a observé toutefois qu'il pouvait être directement applicable au traitement d'un produit dérivé du gypse (ou SO₄Ca, ½ H₂O), un plâtre ayant déjà subi un premier chauffage.

## Revendications

1. Procédé de traitement du gypse ( ou SO₄Ca, 2H₂O) comportant les étapes suivantes :
- chauffage dudit gypse jusqu'à une température comprise entre 180 degrés et 600 degrés,
- refroidissement du gypse pour le ramener à une température de moins de 120 degrés en moins de trois minutes,
- introduction de chaux dans une proportion de 2 à 25 pour cent en poids ;
- broyage du mélange résultant pour ramener la granulométrie finale à une valeur comprise entre quelques microns à 200 microns.

2. Procédé selon la revendication 1 **caractérisé en ce que** la phase de refroidissement est effectuée en quelques secondes.

3. Procédé selon la revendication 1 **caractérisé en ce que** la température de cuisson est réglée de manière à fixer la proportion variable d'Anhydrite II et d'Anhydrite III.

4. Procédé selon la revendication 1 **caractérisé en ce que** la chaux est introduite avant la phase de cuisson.

5. Procédé de traitement d'un plâtre ( ou SO₄Ca, ½ H₂O) comportant les étapes suivantes :
- chauffage dudit plâtre jusqu'à une température comprise entre 180 degrés et 600 degrés,
- refroidissement dudit plâtre pour le ramener à une température de moins de 120 degrés en moins de trois minutes,
- introduction de chaux dans une proportion de 2 à 25 pour cent en poids ;
- broyage du mélange résultant pour ramener la granulométrie finale à une valeur comprise entre quelques microns à 200 microns.

6. Procédé selon la revendication 5 **caractérisé en ce que** la phase de refroidissement est effectuée en quelques secondes.

7. Procédé selon la revendication 5 **caractérisé en ce que** la température de cuisson est réglée de manière à fixer la proportion variable d'Anhydrite Il et d'Anhydrite III.

8. Procédé selon la revendication 1 **caractérisé en ce que** la chaux est introduite avant la phase de cuisson.

9. Procédé selon l'une quelconque des revendications précédentes permettant la synthèse d'un liant hydraulique.

10. Procédé selon l'une des revendications 1 à 9, **caractérisé en ce qu'**il permet la réalisation d'un additif ou adjuvant.
